(19) Europäisches Patentamt
European Patent Office
Office européen des brevets

(11) **EP 3 224 589 B1**

(12) **EUROPÄISCHE PATENTSCHRIFT**

(45) Veröffentlichungstag und Bekanntmachung des Hinweises auf die Patenterteilung:
**22.04.2020 Patentblatt 2020/17**

(21) Anmeldenummer: **15801182.5**

(22) Anmeldetag: **27.11.2015**

(51) Int Cl.:
*G01L 5/26* *(2006.01)*      *G01M 15/08* *(2006.01)*
*F02D 35/02* *(2006.01)*      *F02D 41/14* *(2006.01)*

(86) Internationale Anmeldenummer:
**PCT/EP2015/077896**

(87) Internationale Veröffentlichungsnummer:
**WO 2016/083566 (02.06.2016 Gazette 2016/22)**

(54) **VERFAHREN UND EINE VORRICHTUNG ZUR ERMITTLUNG DES VORTRIEBSMOMENTS**

METHOD AND A DEVICE FOR DETERMINING THE PROPULSION TORQUE

PROCÉDÉ ET DISPOSITIF DE DÉTERMINATION D'UN COUPLE D'ENTRAÎNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.11.2014 AT 508652014**

(43) Veröffentlichungstag der Anmeldung:
**04.10.2017 Patentblatt 2017/40**

(73) Patentinhaber: **AVL List GmbH**
**8020 Graz (AT)**

(72) Erfinder:
• **PFISTER, Felix**
**8010 Graz (AT)**
• **JAKUBEK, Stefan**
**1230 Wien (AT)**

(74) Vertreter: **Patentanwälte Pinter & Weiss OG**
**Prinz-Eugen-Straße 70**
**1040 Wien (AT)**

(56) Entgegenhaltungen:
**EP-A1- 1 884 756     WO-A1-2005/083252**

• **PAOLO FALCONE ET AL: "NON-LINEAR NET ENGINE TORQUE ESTIMATOR FOR INTERNAL COMBUSTION ENGINE", IFAC SYMPOSIUM ON ADVANCES IN AUTOMOTIVE CONTROL, 30. April 2004 (2004-04-30), XP055250629,**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 224 589 B1

**Beschreibung**

Die gegenständliche Erfindung betrifft ein Verfahren und eine Vorrichtung zur Ermittlung des Vortriebsmoments eines Drehmomentenerzeugers, der auf einem Prüfstand aufgebaut ist.

Auf einem Prüfstand für Kraftfahrzeuge, wie z.B. ein Rollenprüfstand, oder für Kraftfahrzeugkomponenten, wie z.B. ein Motorprüfstand, Antriebsstrangprüfstand, etc., wird ein Prüfling einem Prüflauf unterworfen und damit entwickelt oder hinsichtlich gewisser Fragstellungen getestet. Hierzu werden während des Prüflaufs mittels geeigneter Messsensoren bestimmte Messgrößen erfasst und, im Allgemeinen in Echtzeit, ausgewertet. Ein Prüflauf ist dabei ein zeitlicher Ablauf von Zuständen des Prüflings, wie z.B. in Form eines Drehmoments und/oder einer Drehzahl, die am Prüfstand mittels Aktuatoren bzw. Steuerelementen eingestellt werden. Darüber hinaus wird der Prüfling am Prüfstand in der Regel gleichzeitig mit bestimmten Medien, wie z.B. mit Wasser, Luft, Kraftstoff, Schmiermittel, etc., und Informationen, wie z.B. Steuerbefehlen, Messwerten verbauter Sensoren, simulierten Messwerten, etc., versorgt. Der Prüfling ist dabei mit einer Belastungsmaschine verbunden (häufig auch als Dynamometer oder Dyno bezeichnet), die den Prüfling gemäß dem Prüflauf eine Last, z.B. ein positives oder negatives Lastmoment, oder eine Drehzahl oder allgemein einen Belastungszustand einprägt. Der Prüfling wird gemäß den Vorgaben des Prüflaufs gegen diese Last oder gegen diesen Belastungszustand betrieben.

Ein Prüfling ist allgemein eine Kombination einer Anzahl von realen Komponenten und einer Anzahl von virtuellen Komponenten, wobei die realen Komponenten real als Bauteile am Prüfstand aufgebaut sind und die virtuellen Komponenten als Simulationsmodelle in Echtzeit vorhanden sind und damit simuliert werden und die realen Komponenten ergänzen. Beispielsweise kann auf einem Prüfstand ein Verbrennungsmotor real aufgebaut sein, der mit dem Dyno mechanisch verbunden ist. Der Verbrennungsmotor und die Belastungsmaschine werden gemäß dem Prüflauf angesteuert, beispielsweise durch Verstellen der Drosselklappe des Verbrennungsmotors und durch Vorgabe eines Sollmoments oder einer Solldrehzahl der Belastungsmaschine, was zu einem Zustand des Prüflings und zu einem Belastungszustand führt. Für einen möglichst realitätsnahen Prüflauf, oder aus anderen Gründen, werden die am Prüfstand fehlenden Komponenten des Prüflings, wie z.B. Getriebe, Antriebsstrang, Reifen, Interaktion mit der Umgebung des Prüflings (z.B. Kontakt Reifen - Straße), usw., mittels geeigneter Simulationsmodelle ("virtuelle Komponenten") nachgebildet. An den Schnittstellen zwischen diesen verschiedenen realen und virtuellen Komponenten können verschiedene physikalische Größen, wie z.B. Drehzahlen oder Drehmomente, ausgetauscht werden. Je nach Prüflingskonfiguration werden für die verschiedenen Komponenten des Prüflings für einen Prüflauf folglich verschiedene Drehzahlen und Drehmomente benötigt, die für den Prüflauf zur Verfügung gestellt werden müssen.

Auf einem Prüfstand wird in der Regel von Drehmomentenerzeugern ausgegangen, die ein Drehmoment erzeugen, um damit andere Komponenten anzutreiben oder deren Zustand zu ändern (z.B. zu beschleunigen). In einem Kraftfahrzeug ist der Drehmomentenerzeuger ein Verbrennungsmotor, aber z.B. auch der elektrische Starter-Generator. Im Bereich der Elektromobilität ist der Drehmomentenerzeuger ein Elektromotor. Im Falle von Hybridfahrzeugen, kann der Drehmomentenerzeuger auch eine Kombination aus Verbrennungsmotor und Elektromotor sein, wobei die erzeugten Drehmomente positiv, negativ oder auch gleich Null sein können. Ein solcher Drehmomentenerzeuger erzeugt ein Drehmoment, welches als "inneres Drehmoment" bezeichnet wird.

Im Falle eines Verbrennungsmotors wird das innere Drehmoment als thermodynamisch indiziertes Moment durch die Verbrennung in den Zylindern erzeugt. Durch die Verbrennung entstehen die für Verbrennungsmotoren typischen periodischen Drehmomentenschwankungen. Das innere Drehmoment als thermodynamisch indiziertes Moment eines Verbrennungsmotors ist allerdings nicht direkt messbar, sondern wird entweder aus anderen Messgrößen geschätzt, oder kann durch Indiziermesstechnik ermittelt werden. Eine Schätzung ist beispielsweise in P. Falcone et al: "Non-Linear Net Engine Torque Estimator for internal combustion engine", IFAC Symposium on advances in automotive Control, 30.04.2004, XP055250629, sowie insbesondere in S. Jakubek, et al., "Schätzung des inneren Drehmoments von Verbrennungsmotoren durch parameterbasierte Kalmanfilterung", Automatisierungstechnik, 57 (2009) 8, S.395 - 402 beschrieben, wobei hier das innerer Drehmoment mit einem Vortriebsmoment gleichgesetzt wird. Bei der Indiziermesstechnik werden bekanntermaßen thermodynamische Kenngrößen eines Verbrennungsmotors (Indiziergrößen), insbesondere die in den Zylindern des Verbrennungsmotors herrschenden Innendrücke, aufgelöst über den Kurbelwinkel (oder äquivalent aufgelöst über die Zeit) erfasst oder über eine Periode oder ein Arbeitsspiel oder über andere Mechanismen gemittelt. Aus den Indiziergrößen kann dann mittels bekannter Methoden das thermodynamisch indizierte innere Drehmoment des Verbrennungsmotors berechnet werden. Dies geschieht im Bedarfsfall auch kurbelwinkelsynchron aufgelöst, oder über ein Arbeitsspiel (bei einem 4-Takt Motor z.B. zwei Umdrehungen) oder durch andere Filter oder Mechanismen gemittelt oder anderweitig aufbereitet. Diese Indiziergrößen sind zum Teil auch dem Motorsteuergerät des Verbrennungsmotors bekannt bzw. werden im Motorsteuergerät ermittelt und können folglich auch aus dem Motorsteuergerät ausgelesen und so zur Verfügung gestellt werden, sofern das bedarfsweise in Echtzeit möglich ist.

Die EP 1 884 756 A1 offenbart ein Verfahren zur Modellierung des effektiven Drehmoments eines Verbrennungsmotors. Es werden ein Wellenmoment und eine Drehzahl an der Welle zwischen Motor und Belastungsmaschine gemessen und mittels der Trägheit Beschleunigungsanteile aus dem gemessenen Wellenmoment eliminiert. In einer Modellberechnungs einheit wird daraus ein Modell für das ermittelte effektive Drehmoment in Abhängigkeit der Drehzahl und des Einspritzzeitpunkts erstellt.

Im Falle eines Elektromotors ist das innere Drehmoment das elektrisch indizierte Moment das im Luftspalt zwischen Rotor und Stator wirkt, das sogenannte Luftspaltmoment. Dieses Luftspaltmoment kann beispielsweise wie hinlänglich bekannt beispielsweise aus einer Messung von Strom und Spannung des Elektromotors berechnet werden. Das Luftspaltmoment kann aber auch durch spezielle, kommerziell verfügbare Indiziermesstechnik direkt gemessen werden. Gleichfalls kann auch das Luftspaltmoment als inneres Drehmoment des Elektromotors aus einem Elektromotorsteuergerät ausgelesen werden.

Für einen Prüflauf wird in der Regel in herkömmlicher Weise auch ein messbares Wellenmoment an einer Abtriebswelle der realen Komponente herangezogen. Dieses Wellenmoment kann am Prüfstand mittels geeigneter Messsensoren in hinlänglich bekannter Weise messtechnisch erfasst oder aus dem elektrischen Drehmoment des Dynos und/oder einer am Prüfstand verbauten, hinlänglich bekannten Pendelstütze geschätzt werden. Neben einem Drehmoment wird am Prüfstand standardmäßig auch der Drehwinkel gemessen.

Für einen Prüflauf, insbesondere für die Simulation der virtuellen Komponenten des Prüflings, interessiert aber häufig das Vortriebsmoment. Dieses ist das Drehmoment, das der Drehmomentenerzeuger tatsächlich zum Antreiben einer Last und zur Zustandsänderung (beschleunigen, abbremsen) der vorhandenen Massenträgheiten aufbringen kann.

Auf die Massenträgheiten der realen Komponente des Prüflings (z.B. der Kurbelwelle eines Verbrennungsmotors oder einer Motorwelle eines Elektromotors) wirken in der Regel aber, neben dem inneren Drehmoment und dem Wellenmoment, noch weitere Drehmomente, wie beispielsweise durch bestimmte Nebenaggregate (wie Kühlwasserpumpe, Klimakompressor, Ölpumpe, Starter Motor/Generator, etc.) eingeprägte Momente, Reibmomente, oder Verluste durch Schwingungen des Verbrennungsmotors. Das am Prüfstand messtechnisch erfassbare Wellenmoment entspricht daher in der Regel nicht dem interessierenden Vortriebsmoment des Drehmomentenerzeugers. Solche weiteren Drehmomente sind messtechnisch auch nicht leicht, wenn überhaupt, erfassbar, sodass aus dem gemessenen Wellenmoment häufig auch nicht auf ein qualitativ hochwertiges Vortriebsmoment, das für die Simulation von virtuellen Komponenten des Prüflings verwendet werden könnte, rückgerechnet werden kann.

Das liegt unter anderem auch daran, dass für viele Prüflingskonfigurationen (Kombination aus realen und virtuellen Komponenten) das Messsignal für das Wellenmoment stark verrauscht ist, z.B. wenn an der Abtriebswelle des Drehmomentenerzeugers ein Drehdämpfer wie ein Zweimassenschwungrad real angeordnet ist oder Kupplungsspiele auftreten. Ebenso ist das Messsignal für das Wellenmoment häufig auch nicht ausreichend aufgelöst, zeitlich und/oder im Messbereich. Abgesehen davon wird das Wellenmoment nicht in allen Prüfstandkonfigurationen messtechnisch erfasst, sodass das Wellenmoment auch nicht immer zur Verfügung steht. In diesem Fall kann beispielsweise das Drehmoment des Dynos oder eines Biegebalkens zu Verfügung stehen und verwendet werden, wobei ein solches Drehmoment das Wellenmoment aber selbst nur annähern kann.

Ähnliche Probleme können sich für das Messsignal des Drehwinkels, der Winkelgeschwindigkeit und der Winkelbeschleunigung ergeben, die am Prüfstand ebenfalls nur unzureichend aufgelöst, zeitlich oder im Messbereich, vorliegen können.

Zudem hat man am Prüfstand auch oftmals das Problem, dass die Nebenaggregate nicht, oder nicht alle Nebenaggregate, real vorhanden sind. Die am Prüfstand messtechnisch erfassten Drehmomente (Wellenmomente, Indiziermomente, ...) wären daher auch nicht das eigentlich interessierende Vortriebsmoment, das z.B. für eine Simulation des Verbrennungsmotors als Teilkomponente eines virtuellen Fahrzeugs in einer Fahrzeugsimulationsumgebung benötigt werden würde.

Aufgrund der obigen Ausführungen ist auch einsichtig, dass auch die messtechnisch erfassbaren indizierten Drehmomente, egal ob thermodynamisch und/oder elektrisch, deren Summe als "inneres Drehmoment" bezeichnet wird, nicht als Vortriebsmoment herangezogen werden können. Zudem sind teilweise am Prüfstand auch nicht immer alle Zylinder real vorhanden (z.B. bei einem Einzylinderversuchsmotor) oder sind nicht alle Zylinder durch Indiziermesstechnik indiziert, um Indiziergrößen zu erfassen.

Es ist daher eine Aufgabe der gegenständlichen Erfindung ein Verfahren und eine Vorrichtung anzugeben, mit denen, auch mit den am Prüfstand verfügbaren teilweise qualitativ schlechten Messgrößen, ein qualitativ hochwertiges Vortriebsmoment eines Drehmomentenerzeugers auf einfache Weise zur Verfügung gestellt werden kann.

Diese Aufgabe wird erfindungsgemäß dadurch gelöst, dass das innere Drehmoment des Drehmomentenerzeugers gemessen wird und anhand dieses gemessenen inneren Drehmoments aus einer Bewegungsgleichung mit dem gemessenen inneren Drehmoment, einem dynamischen Drehmoment und einem an einer Abtriebswelle des Drehmomentenerzeugers gemessenen Wellenmoment ein Korrekturmoment geschätzt wird und aus dem geschätzten Korrekturmoment und dem gemessenen inneren Drehmoment das Vortriebsmoment berechnet wird. Mit der Messung des inneren Drehmoments des Drehmomentenerzeugers erhält man eine qualitativ hochwertige Messgröße, die es ermöglicht in einem Zwischenschritt aus den qualitativ schlechten Messgrößen des Wellenmoments (und/oder eventuell dem Drehmoment der Pendelstütze und/oder des elektrischen Drehmomentes des Dynos) und/oder eines Drehwinkels ein Korrekturmoment zu schätzen und daraus in einem zweiten Schritt das gesuchte Vortriebsmoment zu berechnen. Durch die Schätzung kann der Einfluss der qualitativ schlechten Messgrößen reduziert werden und es kann eine gute Schätzung des Korrekturmoments erzielt werden, weil das Korrekturmoment entweder nicht oder nur sehr langsam von der Zeit abhängig ist oder weil ein Modell des Korrekturmomentes online aufgebaut und kontinuierlich korrigiert wird. Dies führt zu einem qualitativ guten Vortriebsmoment, das in weiteren Komponenten, insbesondere in Prüfläufen oder virtuellen Komponenten verwendet werden kann. "Qualitativ gut" bedeutet hierbei insbesondere, dass das berechnete Vortriebsmoment in ausreichend hoher zeitlicher (winkelmäßiger) und betragsmäßiger Auflösung vorliegt und nicht von störenden Störsignalen (wie einem Messrauschen) überlagert ist.

Dieses Vorgehen ermöglicht es aber weiters, dass über das Korrekturmoment auch Einflüsse auf den Drehmomentenerzeuger abgebildet werden, deren Quellen real am Prüfstand nicht vorhanden sind. Beispielsweise können Nebenaggregate berücksichtigt werden, die an sich als Drehmoment auf die Massenträgheit des des Drehmomentenerzeugers wirken, die aber real am Prüfstand nicht vorhanden sind. Gleichfalls können damit auch typische Verluste im Drehmomentenerzeuger, wie z.B. durch Reibung hervorgerufene Verluste, berücksichtigt werden. Das eröffnet auch den Weg, den real am Prüfstand aufgebauten Drehmomentenerzeuger mit anderen Reibungsverlusten (z.B. über ein anderes Schmiermittel) zu berücksichtigen, als real vorhanden sind.

Wenn die Bewegungsgleichung beispielsweise über eine bestimmte Zeitspanne gemittelt wird und der Mittelwert als geschätztes Korrekturmoment verwendet wird, werden auch Störungen des Messsignale des Wellenmoments und/oder des Drehwinkels ausgemittelt und deren Einfluss auf die Schätzung des Korrekturmoments erheblich reduziert.

Um auch eine Abhängigkeit des Korrekturmoments von der Winkelgeschwindigkeit zu modellieren, kann vorteilhafter Weise vorgesehen sein, das Korrekturmoment aus einem Grundkorrekturmoment und zumindest einem von der Winkelgeschwindigkeit abhängigen Term zu bilden, wobei das Grundkorrekturmoment und der Parameter aus zumindest zwei Mittelungen der Bewegungsgleichung ermittelt werden. Damit kann die Genauigkeit der Schätzung des Korrekturmoments erhöht werden.

Dabei ist es auch vorteilhaft, wenn ein Modell des Korrekturmoments erstellt wird, indem ein Kennfeld des Korrekturmoments zum Beispiel über die Winkelgeschwindigkeit erstellt wird. Dieses Modell kann auf einfache Weise durch aktuelle Messungen auch laufend korrigiert (bzw. trainiert) werden. Mit einem derartigen Modell kann das gesuchte Vortriebsmoment in weitere Folge auf einfache und schnelle Weise, auch ohne die Notwendigkeit der Echtzeit-Schätzung des Korrekturmoments, bestimmt werden.

In einer weiteren vorteilhaften Ausgestaltung kann das Korrekturmoment anhand eines Zustandsbeobachters geschätzt werden. Durch den Zustandsbeobachter lassen sich auf einfache Weise gewisse Einflüsse auf die Schätzung gewichten und es lassen sich auch Randbedingungen und Bewegungsintegrale berücksichtigen.

Dazu kann vorteilhafter Weise vorgesehen sein, die Bewegungsgleichung mit einem geschätzten Drehwinkel, bzw. dessen zeitliche Ableitungen, und mit dem geschätzten Korrekturmoment anzuschreiben wird und eine Zielfunktion anzusetzen, woraus das geschätzte Korrekturmoment aus einer Optimierung der Zielfunktion ermittelt werden kann. Das liefert besonders gute Schätzungen des Korrekturmoments. Dieses Verfahren lässt sich einfach realisieren, wenn iterativ aus der Bewegungsgleichung mit einem Schätzwert für das Korrekturmoment ein Schätzwert des Drehwinkels berechnet wird und damit durch Optimierung der Zielfunktion ein neuer Schätzwert für das Korrekturmoment berechnet wird, wobei zu Beginn ein Anfangswert des Korrekturmoments festgelegt wird, und die Iteration solange ausgeführt wird, bis ein festgelegtes Abbruchkriterium erreicht wurde.

Um die Qualität der zugrunde liegenden Messgrößen bei der Schätzung des Korrekturmoments einfließen zu lassen, kann die Zielfunktion Gewichtungsfaktoren enthalten, die mittels eines Kalmanfilters berechnet werden. Auf diese Weise kann die Qualität der Schätzung noch weiter verbessert werden.

Aus den anhand des Zustandsbeobachters ermittelten Korrekturmomenten kann auch ein mathematisches Modell für das Korrekturmoment trainiert werden, beispielsweise in Form eines neuronalen Netzwerkes, das anhand von aktuellen Schätzungen des Korrekturmoments auch korrigiert werden kann. Mit einem derartigen Modell kann das gesuchte Vortriebsmoment in weitere Folge auf einfache und schnelle Weise, auch ohne die Notwendigkeit der Schätzung des Korrekturmoments, bestimmt werden.

Das erfindungsgemäße Verfahren findet besonders vorteilhaft Anwendung in einem Prüflauf für einen Prüfling auf einem Prüfstand, wobei der Prüfling den Drehmomentenerzeuger als reale Komponente und zumindest eine simulierte virtuelle Komponente umfasst, wobei die virtuelle Komponente des Prüflings die reale Komponente des Prüflings ergänzt und die Simulation der virtuellen Komponente das berechnete Vortriebsmoment verarbeitet. Damit können der Simulation im Prüflauf qualitativ hochwertige Größen des Vortriebsmoments, aber auch des Korrekturmoments, zur Verfügung gestellt werden, wodurch auch genauere Simulationen ermöglicht werden. Das ermöglicht auch, dass die Schnittstelle zur nachgelagerten Simulationseinheit gleich bleiben können unabhängig davon, welche Teilkomponenten des Drehmomenterzeugers im Einzelfall real und welche virtuell sind.

Wenn der Drehmomentenerzeuger beispielsweise einen n-zylindrischen Verbrennungsmotor umfasst, kann beispielsweise vorgesehen sein, dass das Vortriebsmoment des n-zylindrischen Verbrennungsmotors aus dem an zumindest einem Zylinder des Verbrennungsmotors gemessenen inneren Drehmoments berechnet wird. Die nachgeschaltete Simulationseinheit sieht dabei immer den n-zylindrischen Verbrennungsmotor, obwohl am Prüfstand kein solcher Verbrennungsmotors aufgebaut ist.

Die genannte Aufgabe wird weiters durch eine eingangs erwähnte Vorrichtung erfindungsgemäß dadurch gelöst, dass am Prüfstand ein Indiziermesssystem angeordnet ist, das dazu eingerichtet ist, ein inneres Drehmoment des Drehmomentenerzeugers zu messen und dass eine Korrekturmomentberechnungseinheit und eine Vortriebsmomentberechnungseinheit vorgesehen sind, wobei die Korrekturmomentberechnungseinheit dazu eingerichtet ist, anhand des gemessenen inneren Drehmoments aus einer Bewegungsgleichung mit dem gemessenen inneren Drehmoment, einem dynamischen Drehmoment und einem an einer Abtriebswelle des Drehmomentenerzeugers gemessenen Wellenmoment ein Korrekturmoment abzuschätzen und die Vortriebsmomentberechnungseinheit dazu eingerichtet ist, aus dem geschätzten Korrekturmoment und dem gemessenen inneren Drehmoment das Vortriebsmoment gemäß der Beziehung $M_V = \hat{M}_{cor} + M_i$ zu berechnen. $M_V$ bezeichnet dabei das Vortriebsmoment, $\hat{M}_{cor}$ das geschätzte Korrekturmoment und $M_i$ das gemessene innere Drehmoment.

In einer Variante der Erfindung umfasst der Drehmomentenerzeuger einen n-zylindrischen Verbrennungsmotor und am Prüfstand ist an zumindest einem Zylinder ein Indiziermesssystem angeordnet.

In einer weiteren Variante umfasst der Drehmomentenerzeuger einen n-zylindrischen Verbrennungsmotor und am Prüfstand ist zumindest ein Zylinder des n-zylindrischen Verbrennungsmotors aufgebaut.

Die gegenständliche Erfindung wird nachfolgend unter Bezugnahme auf die Figuren 1 bis 2 näher erläutert, die beispielhaft, schematisch und nicht einschränkend vorteilhafte Ausgestaltungen der Erfindung zeigen. Dabei zeigt

Fig.1 eine typische Prüflingskonfiguration auf einem Prüfstand und

Fig.2 eine erfindungsgemäße Anordnung zu Ermittlung des Vortriebsmoments.

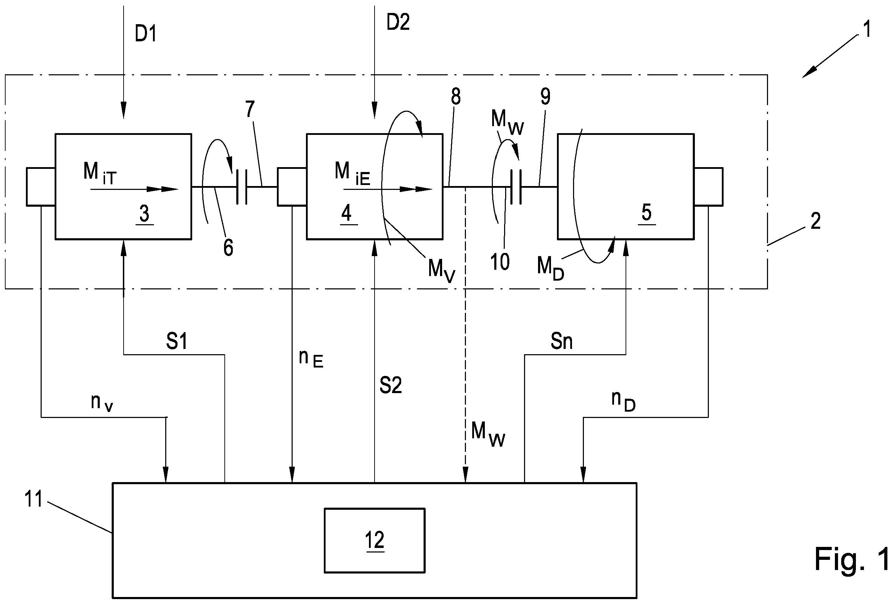

In Fig.1 ist beispielhaft eine Prüfstandkonfiguration 1 auf einem Prüfstand 2 dargestellt. Am Prüfstand 2 ist als reale Komponente des Prüflings real ein Hybrid-Antriebsstrang mit einem realen Verbrennungsmotor 3 und einem realen Elektromotor 4 aufgebaut. "Real" bedeutet hierbei, dass diese realen Komponenten als echte Hardware physisch vorhanden sind. Verbrennungsmotor 3 und Elektromotor 4 sind hier durch eine Verbindungswelle 6 mit Kupplung 7 mechanisch miteinander verbunden. An der Abtriebswelle 8 des Hybrid-Antriebsstranges wirkt das Wellenmoment $M_W$. Der Abtriebswelle 8 wird vom Drehmomentenerzeuger D ein Vortriebsmoment $M_V$ eigeprägt. Eine Belastungsmaschine 5 (Dyno) ist über eine Dynowelle 9 und eine Kupplung 10 mechanisch mit der Abtriebswelle 8 verbunden. Die Belastungsmaschine 5 erzeugt nach Vorgabe durch den durchzuführenden Prüflauf ein Belastungsmoment $M_D$, wovon auch das Wellenmoment $M_W$ beeinflusst wird.

In einer Prüfstandsteuereinheit 11 ist der durchzuführende Prüflauf implementiert. Hierzu ist in der Prüfstandsteuereinheit 11 ein Simulationsmodell 12 (das auch aus vielen einzelnen zusammenwirkenden Teilmodellen bestehen kann) implementiert, das virtuelle Komponenten des Prüflings nachbildet. Virtuelle Komponenten könnten hier z.B. sein ein Schaltgetriebe, ein Differenzialgetriebe, eine Kupplung, die Massenträgheiten des virtuellen Verbrennungsmotors, eine Batterie, die Reifen, das Fahrzeug, die Umgebung des Fahrzeugs, die Interaktion des Fahrzeugs mit der Umgebung, etc. Die Kombination aus realen und virtuellen Komponenten ergibt den Prüfling. Je nach Prüflauf können natürlich unterschiedlichste Prüflingskonfigurationen (reale und virtuelle Komponenten) und Prüfstandkonfigurationen zu Anwendung kommen. Beispielsweise könnten im Falle eines real aufgebauten Allrad-Antriebsstranges auch vier Belastungsmaschinen 5, je eine für jede Seitenwelle des Antriebsstranges, vorgesehen sein. Auf die konkrete Prüflingskonfiguration und die konkreten Prüfstandkonfiguration kommt es bei der Erfindung allerdings nicht an.

Die Prüfstandsteuereinheit 11 ermittelt gemäß dem vorgegebenen Prüflauf auch die Stellgrößen Sn für die Prüfstandkomponenten und für den Prüfling, mit denen insbesondere auch die realen Komponenten der Prüflingskonfiguration und die Belastungsmaschine 5 am Prüfstand 2 angesteuert werden, wie in Fig.1 angedeutet. Die Prüfstandsteuereinheit 11 kann hierzu auch verschiedene Messgrößen aus dem Prüfstand bzw. von den realen Komponenten des Prüflings erfassen, wie z.B. die Drehzahlen des Verbrennungsmotors 3 $n_V$, des Elektromotors 4 $n_E$ und der Belastungsmaschine 5 $n_D$, einen Drehwinkel $\varphi$, sowie das wirkende Wellenmoment $M_W$ an der Abtriebswelle 8, sofern hierzu ein geeigneter Drehmomentensensor verbaut ist, oder alternativ auch das Belastungsmoment $M_D$ oder ein von einer Pendelstütze ermitteltes Drehmoment.

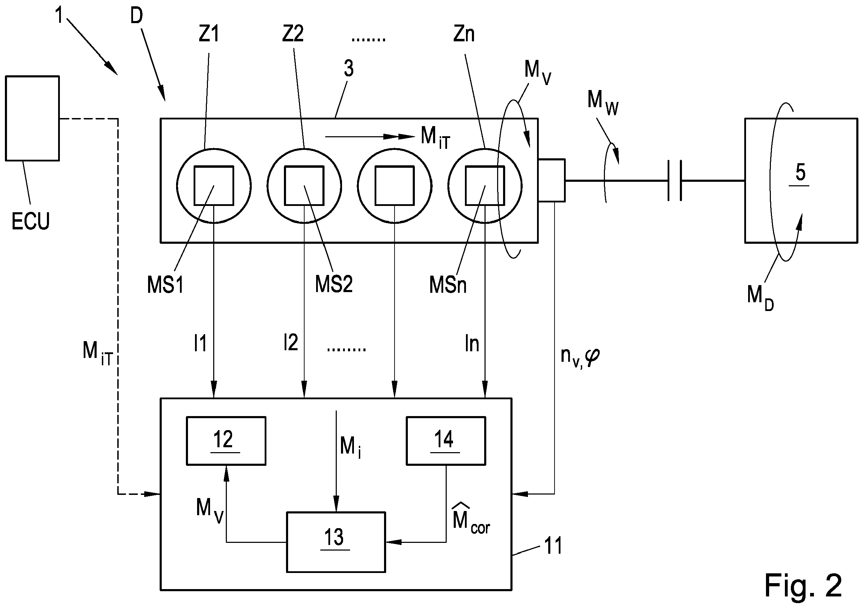

Um das interessierende Vortriebsmoment $M_V$ zu ermitteln kann nicht von einem qualitativ hochwertig messtechnisch erfassten Wellenmoment $M_W$ ausgegangen werden, da ein solcher hochwertiger Messwert in der Regel nicht vorliegt, wie eingangs erläutert wurde. Ganz im Gegenteil ist davon auszugehen, dass das Wellenmoment $M_W$ und/oder der Drehwinkel $\varphi$ als qualitativ schlechtes Messsignal, also in schlechter zeitlicher oder betragsmäßiger Auflösung und/oder stark verrauscht, vorliegt. Daher wird erfindungsgemäß vom inneren Drehmoment $M_i$ des Drehmomentenerzeugers D (angedeutet in Fig.1) ausgegangen. Das wird mit Bezugnahme auf die Fig.2 näher erläutert.

In Fig.2 ist ein n-zylindrischer Verbrennungsmotor 3 als Drehmomentenerzeuger D1 am Prüfstand 1 angeordnet. Der Verbrennungsmotor 3 ist in diesem Beispiel ein Vierzylindermotor. An jedem Zylinder Z1 ... Zn ist ein Indiziermesssystem MS1 ... MSn angeordnet. Ein Indiziermesssystem MS erfasst bekanntermaßen thermodynamische Größen der Verbrennung im Zylinder Z1 ... Zn, wie insbesondere den im jeweiligen Zylinder Z1 ... Zn wirkenden zeitlichen Verlauf des Innendrucks bzw. äquivalent den Verlauf des Innendrucks über den Kurbelwinkel, aus denen sich das innere Drehmoment $M_{iT}$ des Verbrennungsmotors 3 als Summenmoment ergibt. Die derart erfassten Indiziermessgrößen I1 ... In werden an die Prüfstandsteuereinheit 11 weitergeleitet. Hierbei kann eine Indiziermessgröße I1 ... In bereits das innere Drehmoment $M_{iT}$ des Verbrennungsmotors 3 repräsentieren. Alternativ kann das inneren Drehmoment $M_{iT}$ auch aus den Indiziermessgrößen I1 ... In in der Prüfstandsteuereinheit 11 berechnet werden. In einer weiteren Alternative könnte das innere Drehmoment $M_{iT}$ des Verbrennungsmotors 3 auch von einem Motorsteuergerät ECU an die Prüfstandsteuereinheit 11 geliefert werden, wie in Fig.2 angedeutet, sofern das ausreichend schnell und ausreichend genau erfolgen kann.

Im Falle eines Elektromotors 4 als Drehmomentenerzeuger D2 könnten die Indiziermessgrößen I1 ... In beispielsweise den elektrischen Motorstrom und die elektrische Motorspannung umfassen, die vom Indiziermesssystem MS erfasst werden und die dann in ein inneres Drehmoment $M_{iE}$ des Elektromotors 4 (Luftspaltmoment) umgerechnet werden können.

Falls mehrere miteinander verbundene Drehmomentenerzeuger D1, D2 vorhanden sind, wie z.B. in Fig.1, dann addieren sich die einzelnen inneren Drehmomente $M_{iT}$, $M_{iE}$ der einzelnen Drehmomentenerzeuger D1, D2 vorzeichenrichtig zum inneren Drehmoment $M_i$. Das innere Drehmoment $M_i$ des Drehmomentenerzeugers D ergibt sich damit

$$M_i = \sum_{D_j} M_{iD_j}$$

allgemein zu ___ mit $j \in \Box_+$. In der Prüfstandsteuereinheit 11 ist folglich die Summe aller indizierten Drehmomente der einzelnen Drehmomentenerzeuger D1, D2 als inneres Drehmoment $M_i$ des Drehmomentenerzeugers D am Prüfstand 2 in Echtzeit bekannt. Daher wird in Folge nur mehr von einem generalisierten Drehmomentenerzeuger D gesprochen, welcher aus mehreren einzelnen Drehmomentenerzeugern D1, D2 bestehen kann.

Auf die Massenträgheit des Drehmomentenerzeugers D wirken allerdings noch weitere Drehmomente, die das vom Drehmomentenerzeuger D aus dem inneren Drehmoment $M_i$ aufbringbare Vortriebsmoment $M_V$ beeinflussen und die zu einem Korrekturmoment $M_{cor}$ zusammengefasst werden. Diese weiteren Drehmomente bewirken typischerweise eine Reduktion des Vortriebsmoment $M_V$ des Drehmomentenerzeugers D. Typisch dafür ist ein Reibmoment $M_{fric}$, das z.B. die Reibungseffekte im Verbrennungsmotor 3 oder im Elektromotor 4 erfasst. Das Korrekturmoment $M_{cor}$ könnte noch um weitere Drehmomente, die auf die Massenträgheit des Drehmomentenerzeugers D wirken, ergänzt werden. Beispielsweise könnten durch eine Anzahl m mit der Kurbelwelle oder Motorwelle verbundener Nebenaggregate verursachte Drehmomente $M_{auxm}$ berücksichtigt werden. Solche Nebenaggregate können z.B. eine Wasserpumpe, eine Ölpumpe, ein Klimakompressors, ein Starter-Motor/Generator, etc., sein. Das Korrekturmoment $M_{cor}$ würde sich dann

$$M_{cor} = M_{fric} + \sum_n M_{auxn} ,$$

wie folgt ergeben: ___ wobei die Drehmomente natürlich algebraisch (und somit vorzeichenrichtig) anzusetzen sind. Um das Korrekturmoment $M_{cor}$ bei der Ermittlung des Vortriebsmoments $M_V$ berücksichtigen zu können, ist in der Prüfstandsteuereinheit 11 eine Korrekturmomentberechnungseinheit 14 vorgesehen, in der das Korrekturmoment $M_{cor}$ berechnet wird.

Für das Vortriebsmoment $M_V$ des generalisierten Drehmomentenerzeugers D muss aufgrund einer einfachen Definitionsgleichung gelten $M_V = M_i + M_{cor}$, wobei die Drehmomente algebraische Größen sind und daher vorzeichenrichtig anzusetzen sind.

Gleichermaßen muss die Euler'sche Bewegungsgleichung in der Form $M_{dyn} = M_V + M_W$ (Drehmomentenbilanz) berücksichtigt werden. Das dynamische Drehmomente $M_{dyn}$ ergibt sich im einfachsten Fall bekanntermaßen aus $J\ddot{\varphi}$, mit dem an der Kurbelwelle wirkenden Massenträgheitsmoment J des Verbrennungsmotors 3 bzw. dem Massenträgheitsmoment an der Welle des Elektromotors 4 und der Winkelbeschleunigung $\ddot{\varphi}$. Das Massenträgheitsmoment J könnte auch vom Drehwinkel $\varphi$ abhängig sein, wie es typischerweise für eine Kurbelwelle der Fall ist, also $J(\varphi)$. Gleichfalls könnte das dynamische Drehmoment $M_{dyn}$ nicht nur die generalisierte Winkelbeschleunigung $\ddot{\varphi}$ berücksichtigen, sondern

$$\frac{1}{2}\frac{dJ(\varphi)}{d\varphi}\dot{\varphi}^2,$$

um weitere dynamische Momente ergänzt werden, insbesondere um ein Zentrifugalmoment der Form ___ das typischerweise für einen Verbrennungsmotor 3 auftritt, da das Massenträgheitsmoment J über eine Umdrehung der

$$M_{dyn} = J(\varphi)\ddot{\varphi} + \frac{1}{2}\frac{dJ(\varphi)}{d\varphi}\dot{\varphi}^2$$

Kurbelwelle nicht konstant ist. Das dynamische Drehmoment $M_{dyn}$ könnte sich dann zu ___ ergeben. Gleichfalls könnte man auf diese Weise mit dem dynamischen Drehmoment $M_{dyn}$ z.B. berücksichtigen, dass sich ein Massenträgheitsmoment ändert, wenn eine Kupplung 7 zwischen Verbrennungsmotor 3 und Elektromotor 4 geöffnet oder geschlossen wird.

Die Bewegungsgleichung ergibt sich daher ausgeschrieben zu

$$J(\varphi)\ddot{\varphi} + \left[\frac{1}{2}\frac{dJ(\varphi)}{d\varphi}\dot{\varphi}^2\right] = \underbrace{M_i + M_{cor}}_{M_V} + M_w \, .$$

In der eckigen Klammer steht als optionaler Term das Zentrifugalmoment wie oben beschrieben.

Der Drehwinkel $\varphi$, die Winkelgeschwindigkeit $\dot{\varphi}$ oder die Winkelbeschleunigung $\ddot{\varphi}$ können messtechnisch erfasst werden, oder können aus der erfassten Drehzahl $n_{(V,E)}$ abgeleitet werden.

Daraus könnte das gesuchte Vortriebsmoment $M_V$ mit einer Messung des Wellenmoments $M_W$ unmittelbar aus der Bewegungsgleichung abgeleitet werden. Das Problem ist aber die in der Regel sehr schlechte Qualität des Messwertes des Wellenmoments $M_W$, der häufig stark verrauscht und zeitlich und im Betrag schlecht aufgelöst vorliegt. Hinzu kommt, dass auch die Winkelbeschleunigung $\ddot{\varphi}$ eine sehr verrauschte Größe ist, da sie in der Regel messtechnisch nicht direkt gewonnen wird, sondern aus der Winkelgeschwindigkeit $\dot{\varphi}$ durch zeitliche Differentiation gewonnen wird oder aus dem Drehwinkel $\varphi$ durch doppelte zeitliche Differentiation gewonnen. Damit wäre auch das daraus direkt ermittelte Vortriebsmoment $M_V$, beispielsweise für die Verwendung in einer Simulation, ebenfalls kaum brauchbar, bzw. müsste entsprechend aufbereitet (z.B. gefiltert) werden, was aber mit einem Informationsverlust einhergeht.

Um dieses Problem zu umgehen, wird erfindungsgemäß anders vorgegangen, indem aus dem bekannten, und qualitativ hochwertigen und häufig darüber hinaus hochfrequent aufgelösten und nahezu totzeitfrei bereitgestellten inneren Drehmoment $M_i$ und dem verrauschten Wellenmoment $M_w$ und dem verrauschten Beschleunigungssignal $\ddot{\varphi}$ zuerst eine qualitativ hochwertige Schätzung des Korrekturmomentes $M_{cor}$ ermittelt wird. Aus der oben angeführten Definition für das Vortriebsmoment $M_V = M_i + M_{cor}$ kann dann ein qualitativ hochwertiges (nicht verrauschtes und hochfrequentes) Vortriebsmoment $M_V$ ermittelt wird. In der Prüfstandsteuereinheit 11 ist dazu eine Vortriebsmomentberechnungseinheit 13 vorgesehen, die das interessierende Vortriebsmoment $M_V$ berechnet und anderen Komponenten des Prüfstandes 1, insbesondere der Simulation mittels Simulationsmodell 12 der virtuellen Komponenten des Prüflings, zur Verfügung stellt. Das aus Messungen direkt berechnete innere Drehmoment $M_i$ liefert damit eine zusätzliche Messgröße, die es ermöglicht, beide Größen, nämlich das Korrekturmoment $M_{cor}$ und das Vortriebsmoment $M_V$ zu ermitteln.

Selbstverständlich können die Korrekturmomentberechnungseinheit 14 und die Vortriebsmomentberechnungseinheit 13 als eigenständige Hardware ausgestaltet sein, integriert in einer Hardware ausgeführt sein, oder aber auch als Softwaremodule in der Prüfstandsteuereinheit 11 ausgeführt sein.

Die Ermittlung des Korrekturmoments $M_{cor}$ basiert erfindungsgemäß auf einer Schätzung auf Basis des qualitativ hochwertigen inneren Drehmoments $M_i$ und von qualitativ schlechten Messwerten für das Wellenmoment $M_W$ und/oder den Drehwinkel $\varphi$. Die Schätzung kann dabei auf unterschiedliche Weise erfolgen, wie nachfolgend anhand von vorteilhaften Ausgestaltungen beispielhaft ausgeführt wird.

Aus der obigen Bewegungsgleichung kann das Korrekturmoment $M_{cor}$ aus dem Zusammenhang $M_{cor} = M_{dyn} - M_i - M_W$ berechnet werden. Hier macht man sich den Umstand zu Nutze, dass sich das Korrekturmoment $M_{cor}$ in der Regel über die Zeit nur sehr langsam ändert. Das Korrekturmoment $M_{cor}$ kann daher über gewisse Zeiträume hinweg als quasistatische Größe angesehen werden, also $M_{cor} = \overline{M}_{cor} = const.$, mit einem mittleren Korrekturmoment $\overline{M}_{cor}$ als Schätzung $\hat{M}_{cor}$ des Korrekturmoments. Beispielsweise ist ein Reibungsmoment $M_{fric}$ zwar von Parametern wie Temperatur, Luftfeuchtigkeit, Alterungszustand, etc. abhängig, allerdings ändern sich diese Parameter zeitlich nur sehr langsam. Nebenaggregate verursachen in der Regel ebenfalls ein von der Zeit unabhängiges Drehmoment $M_{auxm}$. Das ermöglicht es, das Korrekturmoment $M_{cor}$ zu schätzen, indem über einen relativ langen Zeitraum (bezogen auf die angestrebte Echtzeitberechnung) gemittelt wird. Durch diese zeitliche Mittelung werden gleichzeitig Ungenauigkeiten des Wellenmoments $M_w$ und des dynamischen Momentes $M_{dyn}$ (z.B. aufgrund der verrauschten Messung des Dreh-winkels $\varphi$) ausgemittelt und der Einfluss solcher Ungenauigkeiten reduziert. Wird beispielsweise über ein Arbeitsspiel eines Vierzylinder Verbrennungsmotors gemittelt, folgt aus der Bewegungsgleichung

$$\int_{\varphi=0}^{4\pi}\left(J(\varphi)\ddot{\varphi} + \left[0.5\frac{\delta J(\varphi)}{\delta\varphi}\dot{\varphi}^2\right]\right)d\varphi - \int_{\varphi=0}^{4\pi}\left(M_i + M_w\right)d\varphi = 4\pi\overline{M}_{cor} \, ,$$

woraus das Korrekturmoment $\hat{M}_{cor}$ als mittleres Korrekturmoment $\overline{M}_{cor}$ geschätzt werden kann. In der eckigen Klammer steht als optionaler Term das Zentrifugalmoment wie oben beschrieben. Hierbei reicht es beispielsweise, das mittlere

Korrekturmoment $\overline{M}_{cor}$ einmal zu schätzen und dann für das nächste Arbeitsspiel, oder die nächsten Arbeitsspiele, beizubehalten. Alternativ kann für das mittlere Korrekturmoment $\overline{M}_{cor}$ auch ein Modell für verschiedene Winkelgeschwindigkeiten aufgebaut werden, welches kontinuierlich geschätzt und korrigiert wird. Gleichermaßen könnte das mittlere Korrekturmoment $\overline{M}_{cor}$ auch laufend in Form eines gleitenden Mittelwertes berechnet werden. Anstelle eines Arbeitsspiels kann auch über eine beliebige andere Periode (Zeit oder Winkel) gemittelt werden.

$$\int_{\varphi=0}^{4\pi} M_i \, d\varphi$$

Das Integral kann mit der in der Indiziermesstechnik auch als Indicated Mean Effective Pressure (IMEP) bezeichneten Größe gleichgesetzt werden, eine Größe, die von der Indiziermesstechnik in der Regel direkt geliefert wird oder die in einer Motorsteuerung ECU vorliegt.

Das Modell des Korrekturmoments $M_{cor}$ hängt in der Regel nicht von der Zeit ab, oder nur sehr langsam von der Zeit ab. Das Korrekturmoment $M_{cor}$ kann aber dafür von der Winkelgeschwindigkeit $\dot{\varphi}$ abhängen, also $M_{cor}(\dot{\varphi})$. Auch in diesem Fall kann das Korrekturmoment $M_{cor}$ auf einfache Weise aus der Bewegungsgleichung geschätzt werden, wenn beispielsweise das geschätzte Korrekturmoment $\hat{M}_{cor}(\dot{\varphi})$ als Summe aus einem Grundkorrekturmoment $M_{cor,0}$ und einem von der Winkelgeschwindigkeit $\dot{\varphi}$ abhängigen Term $\kappa\dot{\varphi}$ angeschrieben wird, also $\hat{M}_{cor}(\dot{\varphi})=M_{cor,0} + \kappa\dot{\varphi}$. Der Term $M_{cor,0}$ und der Parameter $\kappa$ ändern sich zeitlich nur sehr langsam. Aus der Bewegungsgleichung folgt dann wieder

$$\int_{\varphi=0}^{\theta}\left(J(\varphi)\ddot{\varphi}+\left[0.5\frac{\delta J(\varphi)}{\delta\varphi}\dot{\varphi}^2\right]\right)d\varphi - \int_{\varphi=0}^{\theta}\left(M_i + M_w\right)d\varphi = \int_{\varphi=0}^{\theta}\left(M_{cor,0} + \kappa\dot{\varphi}\right)d\varphi \,,$$

woraus die beiden Größen $M_{cor,0}$ und der Parameter $\kappa$ berechnet werden können. Dazu kann entweder die Integrationsgrenze $\theta$ oder die Winkelgeschwindigkeit $\dot{\varphi}$ variiert werden, wobei jeweils mindestens zwei Variationen notwendig sind, um die beiden Größen berechnen zu können.

Es ist unmittelbar einsichtig, dass mit den oben beschriebenen Mittelungen der Bewegungsgleichungen auch ein von der Winkelgeschwindigkeit $\dot{\varphi}$ abhängiges Kennfeld (Modell) für das Korrekturmoment $\hat{M}_{cor}$ geschätzt werden kann, das dann für die Berechnung des Vortriebsmoments $M_V$ herangezogen werden kann.

Auf diese Weise können natürlich auch andere Abhängigkeiten des Korrekturmoments $M_{cor}$ berücksichtigt werden, indem das geschätzte Korrekturmoment $\hat{M}_{cor}$ um weitere oder andere Terme erweitert wird. Beispielsweise kann, statt des obigen linearen Zusammenhangs $M_{cor,0} +\kappa\dot{\varphi}$ online auch ein komplexeres, insbesondere auch nichtlineares, Modell für das Korrekturmoment $M_{cor}$ in Abhängigkeit vom Kurbelwinkel $\varphi$ und/oder einer Winkelgeschwindigkeit $\dot{\varphi}$ oder sogar einer Winkelbeschleunigung $\ddot{\varphi}$ ermittelt werden, das online auch laufend korrigiert werden kann.

Selbstverständlich könnte aus den bekannten Größen $M_{dyn}$, $M_i$, $M_W$ auch ein mathematisches Modell für eine Schätzung des Korrekturmoments $\hat{M}_{cor}$ in Abhängigkeit vom Kurbelwinkel $\varphi$ und/oder Winkelgeschwindigkeit $\dot{\varphi}$ bzw. Drehzahl n trainiert werden, beispielsweise in Form eines neuronalen Netzwerkes. Auch könnten die Parameter eines physikalischen Modells des geschätzten Korrekturmoments $\hat{M}_{cor}$ in Abhängigkeit der gemessenen Größen ermittelt werden, beispielsweise mit bekannten Methoden der Parameterschätzung.

Ein Schätzwert des Korrekturmoments $\hat{M}_{cor}$ könnte aus dem bekannten inneren Drehmoment $M_i$ gleichfalls erfindungsgemäß auch anhand eines Zustandsbeobachters geschätzt werden. Das allgemeine Vorgehen beruht wiederum auf der schon angeführten Bewegungsgleichung in der Form

$$J(\varphi)\ddot{\varphi}+\left[\frac{1}{2}\frac{\delta J(\varphi)}{\delta\varphi}\dot{\varphi}^2\right] = \underbrace{M_i + M_{cor}}_{M_V} + M_w \,.$$

Werden mit "∧" Schätzwerte bezeichnet, kann die Bewegungsgleichung in der folgenden Form angeschrieben werden.

$$J(\hat{\varphi})\ddot{\hat{\varphi}}+\left[\frac{1}{2}\frac{\delta J(\varphi)}{\delta\varphi}\dot{\hat{\varphi}}^2\right] = M_i(t) + \hat{M}_{cor}(t) + M_w(t)$$

Dazu wird nun eine beliebige Zielfunktion Z als Funktion eines geschätzten Drehwinkels $\hat{\varphi}$, bzw. dessen zeitliche Ableitungen $\dot{\hat{\varphi}}$ und $\ddot{\hat{\varphi}}$, und des geschätzten Korrekturmoment $\hat{M}_{cor}$ definiert, die minimiert wird, $Z \to \min$.

Als Zielfunktion Z wird beispielhaft ein Integral der Form

$$\int_{t=0}^{T_{max}} \left\{ \lambda_\varphi \left( \varphi_m(t) - \hat{\varphi}(t) \right)^2 + \lambda_M \hat{M}_{cor}^2(t) \right\} dt = \min ,$$

oder ein Integral der Form

$$\int_{t=0}^{T_{max}} \left\{ \lambda_\varphi \left( \varphi_m(t) - \hat{\varphi}(t) \right)^2 + \lambda_{\dot{\varphi}} \left( \dot{\varphi}_m(t) - \dot{\hat{\varphi}}(t) \right)^2 + \lambda_M \hat{M}_{cor}^2(t) \right\} dt = \min$$

verwendet, wobei mit "m" gemessene Größen bezeichnet werden und mit den Gewichtungsfaktoren $\lambda_\varphi, \lambda_{\dot{\varphi}}, \lambda_M$.

Die Gewichtungsfaktoren $\lambda_\varphi, \lambda_{\dot{\varphi}}, \lambda_M$ werden manuell festgelegt oder können durch bekannte mathematische Verfahren bestimmt werden. Beispielhaft sei hier die Ermittlung der Gewichtungsfaktoren $\lambda_\varphi, \lambda_{\dot{\varphi}}, \lambda_M$ mittels der hinlänglich bekannten Kalmanfilterung erwähnt, wie z.B. im Paper S. Jakubek, et al., "Schätzung des inneren Drehmoments von Verbrennungsmotoren durch parameterbasierte Kalmanfilterung", Automatisierungstechnik, 57 (2009) 8, S.395 - 402 beschrieben ist. Die Kalmanfilterung hat hierbei den Vorteil, dass damit die Qualität der Messwerte bei der Ermittlung der Gewichtungsfaktoren $\lambda_\varphi, \lambda_{\dot{\varphi}}, \lambda_M$ einfließt, was in der erfindungsgemäßen Anwendung, bei der stark verrauschte bzw. schlecht aufgelöste Messwerte vorliegen können, ganz besonders vorteilhaft ist.

Es ist ausdrücklich darauf hinzuweisen, dass die obige Zielfunktion nur beispielhaft angeführt ist und auch eine beliebige andere Zielfunktion Z gleichermaßen verwendet werden könnte. Insbesondere könnten in der Zielfunktion Z auch zeitliche Ableitungen des Korrekturmoments $\hat{M}_{cor}$ enthalten sein.

Der gesuchte Schätzwert für das Korrekturmoment $\hat{M}_{cor}$ wird dann durch Minimierung (Optimierung) der Zielfunktion Z ermittelt. Dazu gibt es eine Fülle von bekannten Methoden, die hier nicht alle angeführt werden können. Als Beispiel dafür sei hier eine analytische Lösung des Optimierungsproblems genannt, die sich etwa bei linearen Zielfunktionen Z ableiten lässt (Ricatti-Gleichung). Auch iterative Methoden können zur Anwendung kommen, wie nachfolgend beschrieben wird.

Dazu wird zu Beginn ein Anfangswert für das Korrekturmoment $\hat{M}_{cor}$ vorgegeben. Aus der Bewegungsgleichung wird in jedem Iterationsschritt der geschätzte Drehwinkel $\hat{\varphi}$, bzw. dessen zeitliche Ableitungen $\dot{\hat{\varphi}}$ und $\ddot{\hat{\varphi}}$, berechnet. Das kann auch auf algebraischem Weg erfolgen. Mit dem geschätzten Drehwinkel $\hat{\varphi}$, bzw. dessen zeitliche Ableitungen $\dot{\hat{\varphi}}$ und $\ddot{\hat{\varphi}}$, wird aus der Optimierung der Zielfunktion Z(t) ein neuer Schätzwert für das Korrekturmoment $\hat{M}_{cor}$ berechnet und die obigen Schritte wiederholt, bis ein vorgegebenes Abbruchkriterium für die Optimierung erfüllt ist. Die Schätzung des Korrekturmoments $\hat{M}_{cor}$ kann dabei laufend online während eines Prüflaufs erfolgen.

Es ist aber damit auch denkbar, dass mit der Schätzung des Korrekturmoments $\hat{M}_{cor}$ ein Modell für das Korrekturmoment $\hat{M}_{cor}$ trainiert wird, beispielsweise in Form eines neuronalen Netzwerks. Mit einem solchen Modell kann dann abhängig von bestimmten Größen, wie z.B. eine Winkelgeschwindigkeit $\dot{\varphi}$, das Korrekturmoment $\hat{M}_{cor}$ für einen Prüflauf ermittelt werden. Das Modell kann dabei natürlich auch laufend mit aktuellen Messwerten und der oben beschriebenen Methode aktualisiert werden.

Es ist in diesem Zusammenhang auch hinlänglich bekannt, dass in der Optimierung Randbedingungen für die Größen der Zielfunktion definiert sein können, die bei der Optimierung berücksichtigt werden.

Mit dem nach einer der oben beschriebenen Methoden ermittelten und damit bekannten Schätzwert des Korrekturmoments $\hat{M}_{cor}$ kann dann aus der obigen Bilanzgleichung das Vortriebsmoment $M_V$ des Drehmomentenerzeugers D in der Form $M_V = \hat{M}_{cor} + M_i$ ermittelt werden.

Das ermöglicht es, das Vortriebsmoment $M_V$ für einen Prüflauf, aber auch für andere Zwecke, insbesondere für Simulationszwecke in einem Simulationsmodell 12, zur Verfügung zu stellen. Diese Berechnung erfolgt für den Prüflauf in vorgegebenen Zeitschritten, z.B. jede Millisekunde oder jeden 1 Grad Drehwinkel $\varphi$, also in Echtzeit. Damit steht das Vortriebsmoment $M_V$ zu jedem gewünschten Zeitschritt zur Verfügung, beispielsweise um in einem Simulationsmodell 12 für eine virtuelle Komponenten des Prüflings verarbeitet zu werden.

Neben dem Vortriebsmoment $M_V$ kann auch noch das gemessene Wellenmoment $M_W$ plausibilisiert werden. Aus der Kenntnis des Vortriebsmomentes $M_V$ und des dynamischen Drehmoments $M_{dyn}$ kann aus der obigen Bewegungsgleichung unmittelbar ein geschätztes/berechnetes Wellenmoment $\hat{M}_W$ bestimmt werden. Auf diese Weise kann die Messung des Wellenmoments $M_W$ plausibilisiert werden, z.B. um einen Wellenbruch am Prüfstand 2 zu identifizieren. Damit kann aber auch das gemessene (verrauschte und/oder ungenaue) Wellenmoment $M_W$ korrigiert werden oder durch das berechnete geschätzte Wellenmoment $\hat{M}_W$ ersetzt werden. Damit kann für eine Simulation in einem Simulationsmodell 12 oder für andere Komponenten des Prüfstandes 2 auch ein qualitativ besseres Wellenmoment $M_W$ zu Verfügung gestellt werden.

Durch die Kenntnis eines Korrekturmoments $M_{cor}$, eigentlich eines Schätzwertes für das Korrekturmoment

$\hat{M}_{cor}$, können am Prüfstand 2 auch verschiedene Einflüsse auf das Vortriebsmoment $M_V$ studiert werden. Insbesondere lässt sich damit der Einfluss verschiedener in das Korrekturmoment $M_{cor}$ einfließender Drehmomente untersuchen.

Als Beispiel sei ein bestimmter Prüflauf genannt, bei dem ein Verbrennungsmotor 3 anhand von Vorgaben des Prüflaufs betrieben wird und dabei die Abgasemissionen gemessen werden. Untersucht werden könnte nun z.B. wie sich die Abgasemissionen ändern, wenn ein anderer Klimakompressor (der als virtuelle Komponente des Prüflings simuliert wird) verwendet wird oder wenn ein anderes Schmieröl (z.B. über Korrekturfaktoren bei der Ermittlung des Korrekturmoments $M_{cor}$) verwendet wird. Diese Untersuchungen lassen sich dabei durchführen, ohne dass die jeweiligen Komponenten (hier Klimakompressor, oder Schmieröl) real vorhanden sein müssen. Es ist ausreichend, wenn diese virtuell vorhanden sind, was eine erhebliche Erleichterung in der Entwicklung eines Prüflings darstellt. Insbesondere auch deshalb, weil zum Zeitpunkt von ersten Prüfläufen oftmals noch nicht alle vom Drehmomentenerzeuger D angetriebenen Komponenten real verfügbar sind.

Aber auch ein weiteres Testszenario ist mit dem erfindungsgemäßen Vorgehen denkbar. Wenn im Simulationsmodell 12 ein virtuelles Gesamtfahrzeug mit einem Mehrzylinder-Verbrennungsmotor simuliert wird, dann wird an der Schnittstelle zwischen Berechnungseinheit 13 und Simulationsmodell 12 das Vortriebsmoment $M_V$ des Mehrzylinder-Verbrennungsmotors erwartet. Wenn am Prüfstand 1 real aber nur ein Einzylinder-Verbrennungsmotor aufgebaut ist, kann trotzdem ein Prüflauf dafür realisiert werden. Die fehlenden Zylinder werden in der Berechnungseinheit 13 hinzu simuliert. Das erfolgt im einfachsten Fall durch Multiplikation aller Messgrößen des real aufgebauten Zylinders mit einem entsprechenden Faktor und im Bedarfsfalle auch mit einer entsprechenden Phasenverschiebung und Korrektur der dynamischen Drehmomente $M_{dyn}$ (insbesondere bei einem Verbrennungsmotor). Das ist insbesondere interessant bei der Entwicklung von Großmotoren, z.B. Schiffsmotoren mit hoher Zylinderanzahl, wodurch erste Prüfläufe möglich werden, bevor der Großmotor als ganzes gebaut werden muss.

Das Simulieren von fehlenden Zylindern könnte auch dann notwendig sein, wenn am Prüfstand 2 nicht alle Zylinder des Verbrennungsmotors 3 mit einem Indiziermesssystem M versehen sind, In diesem Fall würde man die Zylinder ohne Indiziermesssystem M dazu simulieren. Das Simulationsmodell 12 würde folglich stets das Vortriebsmoment $M_V$ des erwarteten Mehrzylindermotors, gegebenenfalls mit allen Nebenaggregaten, erhalten.

Dies hat weiters den unschätzbaren Vorteil, dass am Prüfstand 2 Schnittstellen, z.B. zu Komponenten des Simulationsmodells 12, unverändert bleiben können, unabhängig davon, welche Anteile des Prüflings real und welche virtuell vorhanden sind.

Gleichermaßen könnte das erfindungsgemäße Verfahren um weitere Bewegungsfreiheitsgrade erweitert werden. Dabei würde man nicht von einer Bewegungsgleichung in einem Bewegungsfreiheitsgrad, hier der Drehwinkel $\varphi$, ausgehen, sondern von einem Gleichungssystem gemäß der Anzahl der Bewegungsfreiheitsgrade. Das ist z.B. interessant, wenn der Drehmomentenerzeuger D mit einer nicht starren Aufhängung modelliert wird, wie es z.B. im Falle eines Verbrennungsmotors 4 in einem Fahrzeug der Fall ist. Die wirkenden Kräfte bzw. Momente bewirken dabei aufgrund der Maschinendynamik auch eine entsprechende Bewegung des Drehmomentenerzeugers D relativ zum Fahrzeug. Auf diese Weise würde man mehrdimensionale Bewegungsgleichungen erhalten, die im Sinne der Erfindung als oben beschriebene Bewegungsgleichung angesehen werden. Am grundsätzlichen, oben beschriebenen erfindungsgemäßen Vorgehen ändert sich dadurch nichts.

**Patentansprüche**

1. Verfahren zur Ermittlung des Vortriebsmoments ($M_V$) eines Drehmomentenerzeugers (D), der auf einem Prüfstand (2) aufgebaut ist, wobei ein inneres Drehmoment ($M_i$) des Drehmomentenerzeugers (D) gemessen wird und anhand des gemessenen inneren Drehmoments ($M_i$) aus einer Bewegungsgleichung mit dem gemessenen inneren Drehmoment ($M_i$), einem dynamischen Drehmoment ($M_{dyn}$) und einem an einer Abtriebswelle (8) des Drehmomentenerzeugers (D) gemessenen Wellenmoment ($M_W$) ein Korrekturmoment ($\hat{M}_{cor}$) geschätzt wird und aus dem geschätzten Korrekturmoment ($\hat{M}_{cor}$) und dem gemessenen inneren Drehmoment ($M_i$) das Vortriebsmoment ($M_V$) gemäß der Beziehung $M_V = \hat{M}_{cor} + M_i$ berechnet wird.

2. Verfahren nach Anspruch 1, **dadurch gekennzeichnet, dass** die Bewegungsgleichung über eine bestimmte Zeitspanne gemittelt wird und der Mittelwert als geschätztes Korrekturmoment ($\hat{M}_{cor}$) verwendet wird.

3. Verfahren nach Anspruch 2, **dadurch gekennzeichnet, dass** das Korrekturmoment ($\hat{M}_{cor}$) aus einem Grundkorrekturmoment ($\hat{M}_{cor,0}$) und zumindest einem von der Winkelgeschwindigkeit ($\dot{\varphi}$) abhängigen Term $\kappa \, \dot{\varphi}$ gebildet wird und das Grundkorrekturmoment ($M_{cor,0}$) und der Parameter ($\kappa$) aus zumindest zwei Mittelungen der Bewegungsgleichung ermittelt werden.

4. Verfahren nach Anspruch 2 oder 3, **dadurch gekennzeichnet, dass** ein Kennfeld des Korrekturmoments ($\hat{M}_{cor}$)

über die Winkelgeschwindigkeit ($\dot{\varphi}$) erstellt wird.

5. Verfahren nach Anspruch 1, **dadurch gekennzeichnet, dass** aus der Bewegungsgleichung ein Zustandsbeobachter erstellt wird, mit dem das Korrekturmoment ($\hat{M}_{cor}$) geschätzt wird.

6. Verfahren nach Anspruch 5, **dadurch gekennzeichnet, dass** die Bewegungsgleichung mit einem geschätzten Drehwinkel ($\hat{\varphi}$), bzw. dessen zeitliche Ableitungen ($\dot{\hat{\varphi}}$) und ($\ddot{\hat{\varphi}}$), und mit dem geschätzten Korrekturmoment ($\hat{M}_{cor}$) angeschrieben wird und eine Zielfunktion (Z) angesetzt wird, wobei die Zielfunktion (Z) den geschätzten Drehwinkel ($\hat{\varphi}$) und einen gemessenen Drehwinkel ($\varphi_m$), sowie das geschätzte Korrekturmoment ($\hat{M}_{cor}$) umfasst, **und dass** das geschätzte Korrekturmoment ($\hat{M}_{cor}$) aus einer Optimierung der Zielfunktion (Z) ermittelt wird.

7. Verfahren nach Anspruch 6, **dadurch gekennzeichnet, dass** in einem iterativen Verfahren aus der Bewegungsgleichung mit einem Schätzwert für das Korrekturmoment ($\hat{M}_{cor}$) ein Schätzwert des Drehwinkels ($\hat{\varphi}$) berechnet wird und damit durch Optimierung der Zielfunktion (Z) ein neuer Schätzwert für das Korrekturmoment ($\hat{M}_{cor}$) berechnet wird, wobei zu Beginn ein Anfangswert des Korrekturmoments ($\hat{M}_{cor}$) festgelegt wird, und die Iteration solange ausgeführt wird, bis ein festgelegtes Abbruchkriterium erreicht wurde.

8. Verfahren nach Anspruch 6 oder 7, **dadurch gekennzeichnet, dass** die Zielfunktion (Z) Gewichtungsfaktoren ($\lambda_\varphi, \lambda_{\dot{\varphi}}, \lambda_M$) enthält.

9. Verfahren nach einem der Ansprüche 6 bis 8, **dadurch gekennzeichnet, dass** mit den anhand des Zustandsbeobachters ermittelten Korrekturmomenten ($\hat{M}_{cor}$) ein mathematisches Modell für das Korrekturmoment ($\hat{M}_{cor}$) trainiert wird.

10. Verfahren nach Anspruch 9, **dadurch gekennzeichnet, dass** das mathematische Modell anhand von aktuellen Schätzungen des Korrekturmoments ($\hat{M}_{cor}$) korrigiert wird.

11. Verwendung des Verfahrens nach einem der Ansprüche 1 bis 10 in einem Prüflauf für einen Prüfling auf einem Prüfstand (2), wobei der Prüfling den Drehmomentenerzeuger (D) als reale Komponente und zumindest eine simulierte virtuelle Komponente umfasst, wobei die virtuelle Komponente des Prüflings die reale Komponente des Prüflings ergänzt und die Simulation der virtuellen Komponente das berechnete Vortriebsmoment ($M_V$) verarbeitet.

12. Verwendung nach Anspruch 11, **dadurch gekennzeichnet, dass** der Drehmomentenerzeuger (D) einen n-zylindrischen Verbrennungsmotor (3) umfasst und das Vortriebsmoment ($M_V$) des n-zylindrischen Verbrennungsmotors (3) aus dem an zumindest einem Zylinder (Zn) des Verbrennungsmotors (3) gemessenen inneren Drehmoments ($M_i$) berechnet wird.

13. Vorrichtung zur Ermittlung des Vortriebsmoments ($M_V$) eines Drehmomentenerzeugers (D), der auf einem Prüfstand (2) aufgebaut ist, wobei am Prüfstand (2) ein Indiziermesssystem (MS) angeordnet ist, das ein inneres Drehmoment ($M_i$) des Drehmomentenerzeugers (D) misst und dass eine Korrekturmomentberechnungseinheit (14) und eine Vortriebsmomentberechnungseinheit (13) vorgesehen sind, wobei die Korrekturmomentberechnungseinheit (14) anhand des gemessenen inneren Drehmoments ($M_i$) aus einer Bewegungsgleichung mit dem gemessenen inneren Drehmoment ($M_i$), einem dynamischen Drehmoment ($M_{dyn}$) und einem an einer Abtriebswelle (8) des Drehmomentenerzeugers (D) gemessenen Wellenmoment ($M_W$) ein Korrekturmoment ($\hat{M}_{cor}$) schätzt und die Vortriebsmomentberechnungseinheit (13) aus dem geschätzten Korrekturmoment ($\hat{M}_{cor}$) und dem gemessenen inneren Drehmoment ($M_i$) das Vortriebsmoment ($M_V$) gemäß der Beziehung $M_V = \hat{M}_{cor} + M_i$ berechnet.

14. Vorrichtung nach Anspruch 13, **dadurch gekennzeichnet, dass** der Drehmomentenerzeuger (D) einen n-zylindrischen Verbrennungsmotor (3) umfasst und am Prüfstand (2) an zumindest einem Zylinder (Zn) ein Indiziermesssystem (MSn) angeordnet ist.

15. Vorrichtung nach Anspruch 13, **dadurch gekennzeichnet, dass** der Drehmomentenerzeuger (D) einen n-zylindrischen Verbrennungsmotor (3) umfasst und am Prüfstand (2) zumindest ein Zylinder (Zn) des n-zylindrischen Verbrennungsmotor (3) aufgebaut ist.

**Claims**

1. A method for determining the propulsion torque ($M_v$) of a torque generator (D), which is mounted on a test bench (2), wherein an inner torque ($M_i$) of the torque generator (D) is measured and, based on the measured inner torque ($M_i$), from an equation of motion, comprising the measured inner torque ($M_i$), a dynamic torque ($M_{dyn}$) and a shaft torque ($M_w$) measured on an output shaft (8) of the torque generator (D), a correction torque ($\hat{M}_{cor}$) is estimated, and from the estimated correction torque ($\hat{M}_{cor}$) and from the measured inner torque ($M_i$), the propulsion torque ($M_v$) is calculated according to the relation $M_v = \hat{M}_{cor} + M_i$.

2. The method according to claim 1, **characterized in that** the equation of motion is averaged over a certain time period and the average value is used as an estimated correction torque ($\hat{M}_{cor}$).

3. The method according to claim 2, **characterized in that** the correction torque ($\hat{M}_{cor}$) is formed by a basic correction torque ($M_{cor,0}$) and at least one term $\kappa\dot{\varphi}$, as a function of angular velocity ($\dot{\varphi}$) and the basic correction torque ($M_{cor,0}$) and the parameter ($\kappa$) are determined by at least two averaging operations on the equation of motion.

4. The method according to claim 2 or 3, **characterized in that** a characteristic map of the correction torque ($\hat{M}_{cor}$) is formed over angular velocity ($\dot{\varphi}$).

5. The method according to claim 1, **characterized in that** from the equation of motion a state observer is provided, which estimates the correction torque ($\hat{M}_{cor}$).

6. The method according to claim 5, **characterized in that** the equation of motion is written with an estimated rotation angle ($\hat{\varphi}$), or its temporal derivatives ($\dot{\hat{\varphi}}$) and ($\ddot{\hat{\varphi}}$), and with the estimated correction torque ($\hat{M}_{cor}$), and a target function (Z) is set, wherein the target function (Z) comprises the estimated rotation angle ($\hat{\varphi}$), and a measured rotation angle ($\varphi_m$), as well as the estimated correction torque ($\hat{M}_{cor}$), **and that** the estimated correction torque ($\hat{M}_{cor}$) is determined by optimizing the target function (Z).

7. The method according to claim 6, **characterized in that** an estimated value of the rotation angle ($\hat{\varphi}$) is calculated in an iterative method from the equation of motion with an estimated value for the correction torque ($\hat{M}_{cor}$), and therefrom by optimizing the target function (Z), a new estimated value for correction torque ($\hat{M}_{cor}$) is calculated, wherein at the beginning an initial value of the correction torque ($\hat{M}_{cor}$) is defined and the iteration is continued until a defined stop criterion is met.

8. The method according to claim 6 or 7, **characterized in that** the target function (Z) contains weighting factors ($\lambda_\varphi, \lambda_{\dot{\varphi}}, \lambda_M$).

9. The method according to any of claims 6 to 8, **characterized in that** with the correction torques ($\hat{M}_{cor}$) determined by the state observer, a mathematical model for the correction torque ($\hat{M}_{cor}$) is trained.

10. The method according to claim 9, **characterized in that** the mathematical model is corrected on the basis of current estimates of the correction torque ($\hat{M}_{cor}$).

11. A use of the method according to any of claims 1 to 10 in a test run for a test object on a test bench (2), wherein the test object comprises the torque generator (D) as a real component and at least one simulated virtual component, wherein the virtual component of the test object complements the real component of the test object, and the simulation of the virtual component processes the calculated propulsion torque ($M_v$).

12. The use according to claim 11, **characterized in that** the torque generator (D) comprises an n-cylinder internal combustion engine (3) and the propulsion torque ($M_v$) of the n-cylinder internal combustion engine (3) is calculated from the inner torque ($M_i$), which is measured on at least one cylinder (Zn) of the internal combustion engine (3).

13. Device for determining the propulsion torque ($M_v$) of a torque generator (D), which is mounted on a test bench (2), wherein an indicating measurement system (MS) is arranged on the test bench (2), which measures an inner torque ($M_i$) of the torque generator (D), and that a correction torque computing unit (14) and a propulsion torque computing unit (13) are provided, wherein the correction torque computing unit (14) estimates a correction torque ($\hat{M}_{cor}$) on the basis of the measured inner torque ($M_i$) from an equation of motion, comprising the measured inner torque ($M_i$), a dynamic torque ($M_{dyn}$) and a shaft torque ($M_w$) measured on an output shaft (8) of the torque generator (D), and the propulsion torque computing unit (13) calculates, from the estimated correction torque ($\hat{M}_{cor}$) and the measured inner torque ($M_i$), the propulsion torque ($M_v$) according to the relation $M_v = \hat{M}_{cor} + M_i$,

14. The device according to claim 13, **characterized in that** the torque generator (D) comprises an n-cylinder internal combustion engine (3), and on the test bench (2), on at least one cylinder (Zn), an indicating measuring system (MSn) is arranged.

15. The device according to claim 13, **characterized in that** the torque generator (D) comprises an n-cylinder internal combustion engine (3), and on the test bench (2), at least one cylinder (Zn) of the n-cylinder internal combustion engine (3) is mounted.

**Revendications**

1. Procédé de détermination d'un couple d'entraînement ($M_v$) d'un générateur de couple de rotation (D) qui est réalisé sur un banc d'essai (2), dans lequel un couple de rotation interne ($M_i$) du générateur de couple de rotation (D) est mesuré, et un couple de correction ($\hat{M}_{cor}$) est estimé au moyen du couple de rotation interne mesuré ($M_i$), à partir d'une équation de mouvement avec le couple de rotation interne mesuré ($M_i$), d'un couple de rotation dynamique ($M_{dyn}$) et d'un couple d'arbre ($M_w$) mesuré au niveau d'un arbre de sortie (8) du générateur de couple de rotation (D), et le couple d'entraînement ($M_v$) est calculé à partir du couple de correction estimé ($\hat{M}_{cor}$) et du couple de rotation interne mesuré ($M_i$) conformément à la relation $m_v = \hat{M}_{cor} + M_i$.

2. Procédé selon la revendication 1, **caractérisé en ce que** l'équation de mouvement est moyennée sur une certaine période de temps, et la valeur moyenne est utilisée comme couple de correction estimé ($\hat{M}_{cor}$).

3. Procédé selon la revendication 2, **caractérisé en ce que** le couple de correction ($\hat{M}_{cor}$) est constitué d'un couple de correction de base ($M_{cor,0}$) et d'au moins un terme $\kappa \, \dot{\varphi}$ dépendant de la vitesse angulaire ($\dot{\varphi}$), et **en ce que** le couple de correction de base ($M_{cor,0}$) et le paramètre ($\kappa$) peuvent être déterminés à partir d'au moins deux moyennes de l'équation de mouvement.

4. Procédé selon la revendication 2 ou 3, **caractérisé en ce qu'**un champ caractéristique du couple de correction ($\hat{M}_{cor}$) est créé par l'intermédiaire de la vitesse angulaire ($\dot{\varphi}$).

5. Procédé selon la revendication 1, **caractérisé en ce qu'**un observateur d'état est créé à partir de l'équation de mouvement avec laquelle le couple de correction ($\hat{M}_{cor}$) est estimé.

6. Procédé selon la revendication 5, **caractérisé en ce que** l'équation de mouvement est écrite avec un angle de rotation estimé ($\hat{\varphi}$), ou ses dérivées temporelles ($\dot{\hat{\varphi}}$) et ($\ddot{\hat{\varphi}}$), et avec le couple de correction estimé ($\hat{M}_{cor}$), et une fonction objective (Z) est appliquée, la fonction objective (Z) comprenant l'angle de rotation estimé ($\dot{\hat{\varphi}}$) et un angle de rotation mesuré ($\varphi_m$), ainsi que le couple de correction estimé ($\hat{M}_{cor}$), **et en ce que** le couple de correction estimé ($\hat{M}_{cor}$) issu d'une optimisation de la fonction objective (Z) est déterminé.

7. Procédé selon la revendication 6, **caractérisé en ce que,** dans un procédé itératif à partir de l'équation de mouvement avec une valeur d'estimation du couple de correction ($\hat{M}_{cor}$), une valeur d'estimation de l'angle de rotation ($\dot{\hat{\varphi}}$) est calculée, et donc une nouvelle valeur d'estimation du couple de correction ($\hat{M}_{cor}$) est calculée par optimisation de la fonction objective (Z), une valeur initiale du couple de correction ($\hat{M}_{cor}$) étant définie au début, et l'itération étant effectuée jusqu'à ce qu'un critère d'interruption défini soit atteint.

8. Procédé selon la revendication 6 ou 7, **caractérisé en ce que** la fonction objective (Z) contient des facteurs de pondération ($\lambda_\varphi, \lambda_{\dot{\varphi}}, \lambda_M$).

9. Procédé selon l'une des revendications 6 à 8, **caractérisé en ce qu'**un modèle mathématique du couple de correction ($\hat{M}_{cor}$) est entraîné avec les moments de correction ($\hat{M}_{cor}$) déterminés au moyen de l'observateur d'état.

10. Procédé selon la revendication 9, **caractérisé en ce que** le modèle mathématique est corrigé au moyen d'estimations actuelles du couple de correction ($\hat{M}_{cor}$).

11. Utilisation du procédé selon l'une des revendications 1 à 10 dans une marche d'essai d'un échantillon sur un banc d'essai (2), dans lequel l'échantillon comprend le générateur de couple de rotation (D) comme composant réel, et au moins un composant virtuel simulé, le composant virtuel de l'échantillon complétant le composant réel, et la simulation du composant virtuel transformant le couple d'entraînement calculé ($M_v$).

12. Utilisation selon la revendication 11, **caractérisée en ce que** le générateur de couple de rotation (D) comprend un moteur à combustion interne n-cylindrique (3), et **en ce que** le couple d'entraînement ($M_v$) du moteur à combustion interne n-cylindrique (3) est calculé à partir du couple de rotation interne mesuré ($M_i$) au niveau d'au moins un cylindre (Zn) du moteur à combustion interne (3).

13. Dispositif de détermination d'un couple d'entraînement ($M_v$) d'un générateur de couple de rotation (D) qui est réalisé sur un banc d'essai (2), dans lequel un système de mesure d'indexation (MS) est disposé sur le banc d'essai (2), lequel système de mesure d'indexation mesure un couple de rotation interne (Mi) du générateur de couple de rotation (D), et dans lequel une unité de calcul de couple de correction (14) et une unité de calcul de couple d'entraînement (13) sont prévues, l'unité de calcul de couple de correction (14) estimant un couple de correction ($\hat{M}_{cor}$) au moyen du couple de rotation interne mesuré ($M_i$), à partir d'une équation de mouvement avec le couple de rotation interne mesuré ($M_i$), d'un couple de rotation dynamique ($M_{dyn}$) et d'un couple d'arbre ($M_w$) mesuré au niveau d'un arbre de sortie (8) du générateur de couple de rotation (D), et l'unité de calcul de couple d'entraînement (13) calculant le couple d'entraînement ($M_v$) à partir du couple de correction estimé ($\hat{M}_{cor}$) et du couple de rotation interne mesuré ($M_i$) conformément à la relation $M_v = \hat{M}_{cor} + M_i$.

14. Dispositif selon la revendication 13, **caractérisé en ce que** le générateur de couple de rotation (D) comprend un moteur à combustion interne n-cylindrique (3), et **en ce qu'**un système de mesure d'indexation (MSn) est disposé sur le banc d'essai (2) au niveau d'au moins un cylindre (Zn).

15. Dispositif selon la revendication 13, **caractérisé en ce que** le générateur de couple de rotation (D) comprend un moteur à combustion interne n-cylindrique (3), et **en ce qu'**au moins un cylindre (Zn) du moteur à combustion interne n-cylindrique (3) est réalisé sur le banc d'essai (2).

Fig. 1

Fig. 2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 1884756 A1

### In der Beschreibung aufgeführte Nicht-Patentliteratur

- **P. FALCONE et al.** Non-Linear Net Engine Torque Estimator for internal combustion engine. *IFAC Symposium on advances in automotive Control,* 30. April 2004
- **S. JAKUBEK et al.** Schätzung des inneren Drehmoments von Verbrennungsmotoren durch parameterbasierte Kalmanfilterung. *Automatisierungstechnik,* 2009, vol. 57 (8), 395-402
- **PAPER S. JAKUBEK et al.** Schätzung des inneren Drehmoments von Verbrennungsmotoren durch parameterbasierte Kalmanfilterung. *Automatisierungstechnik,* 2009, vol. 57 (8), 395-402